# EUROPEAN PATENT APPLICATION

(11) **EP 3 698 685 A1**
(43) Date of publication of application: **26.08.2020**
(21) Application number: 18793494.8
(22) Date of filing: 16.10.2018
(51) Int. Cl.: A47J 31/44, A47J 31/46, B67D 1/04

(54) **BEVERAGE PREPARATION SYSTEM WITH BEVERAGE RECEPTACLE RETENTION**

(30) Priority: 20.10.2017 PT 2017110362
(71) Applicant: Novadelta-Comércio e Industria de Cafés, Lda., 1950-041 Lisboa (PT)
(72) Inventor: MEDINA MUNDT, Jesús, 1800-098 Lisboa (PT); DE JESUS ESTIMA, José Miguel, 1700-240 Lisboa (PT); NABEIRO, Rui Miguel, 7370-112 Campo Maior (PT); GONÇALVES MARTINS, Marco Filipe, 2480-093 Pedreiras Pedreiras (PT)
(74) Representative: Ferreira Pinto, Francisca
(86) International application number: PCT/PT2018/050038
(87) International publication number: WO 2019/078748

(57) **Abstract**

The present invention discloses a beverage preparation system, in particular aromatic beverages such as espresso coffee and similar, comprising at least one type of beverage recipient (1, 1'), for example of the type glass, cup or similar, a beverage discharge disposition (2) associated with a beverage preparation apparatus (3), whereby said beverage discharge disposition (2) is provided so that the beverage flow is discharged through the base region (11) of said beverage recipient (1, 1'), in a direction opposite to that of the gravity force, and that is characterized in that said beverage recipient (1, 1') presents an engagement portion (16) that is adapted so that said beverage recipient (1, 1') can be advantageously retained on said beverage discharge disposition (2) by means of a simple rotation of said beverage recipient (1, 1') between a placement position (I) and a retention position (II), and vice-versa.

## Description

### Field of the invention

The present invention refers to the field of systems for preparing aromatic beverages by means of brewing of a respective precursor substance, in particular systems with beverage discharge means to the interior of a beverage recipient.

### Background of the invention

The prior art presents several solutions of beverage discharge in beverage preparation machines. In particular in the case of aromatic beverages such as for example coffee of espresso type, such beverage discharge is a relevant process with potential impact in the quality of the beverage inside the recipient. In fact, in particular in the case of coffee of espresso type, the main characteristics of the discharge flow determines several aspects such as the production of creme and retention thereof inside of the cup, and the temperature variation as a result of exposure to air during the discharge to the cup.

The document EP 1991094 B1 discloses a beverage recipient adapted so that can be filled from the base and presenting a sealable base wall for such purpose, whereby the beverage is injected under enough pressure to open up a valve provided as discharge flow regulation element.

The document DE 2009 048233 A1 discloses a similar system whereby portions of edible substance are provided to a collection space by means of lifting a lid like disposition that comprises the beverage discharge means. This solution presents construction complexity and ergonomic constrains.

The documents EP 2120652 B1 and CH 702947 A2 disclose beverage preparation systems, including coffee of espresso type, with beverage discharge in a direction opposite to the gravity force and through the support base of the recipient. In these cases, it is necessary that an upstream discharge part directly touches on a recipient disposition of one-way valve type and the retention of the beverage recipients seems to be attained by a pressurized fitting connection of the base region of the recipients with a portion of the discharge disposition that surrounds the beverage discharge element.

The document WO 2013/041580 A1 also discloses a disposition for retention of beverage recipients by means of pressured fitting of an engagement portion that develops in the base region of the recipients and is adapted so that can be retained by engagement elements provided in a placement surface.

The documents EP 2029470 B1 e WO 2011/106259 A1 discloses liquid discharge systems comprising a recipient that presents a base region adapted with an asymmetric configuration, so that can be retained in a discharge disposition through which the beverage is discharged.

The documents DE 10 2009 048233 A1 and WO 2015/173127 A2 disclose beverage preparation systems whereby the flow flows through a direction opposite to the gravity force inside of a brewing device that collects the edible substance precursor of beverage.

The document WO 2013/041580 A1 discloses a support disposition of beverage recipients, provided so that can collect recipients of different dimensions and retain these in removable manner in a filling position.

None of the documents in prior art discloses a solution that provides a beverage preparation system including a brewing device and presenting a beverage discharge disposition in a direction opposite to that of the gravity force, that provides more favourable conditions of retention of the beverage recipient on the beverage discharge disposition.

### General description of the invention

The objective of the present invention is to provide a beverage preparation system including at least one brewing device, in particular of aromatic beverages such as for example coffee of espresso type, adapted to collecting a portion of edible substance, and a beverage discharge disposition that provides the beverage flow in a direction opposite to the direction of the gravity force, through a base region of beverage recipients, and adapted so as to provide better conditions of retention of beverage recipients on said beverage discharge disposition, in particular by means of a retention associated with the form of the base region of said beverage recipient.

This objective is attained according to the present invention by means of a beverage preparation system according to claim 1, whereby preferred embodiments are described in the secondary claims.

In case of a system according to the present invention, said beverage preparation apparatus can comprise, from upstream to downstream along the flow direction:
- a flow pressurization device, for example a pump, adapted so that can supply a fluid flow (FS) under a pressure comprised between 1 and 20 bar, preferentially between 8 and 18 bar,
- a brewing device adapted so that can collect a portion of edible substance, optionally provided inside of a capsule, and so that can supply a beverage discharge flow (BD) of the resulting beverage,
- a beverage discharge disposition adapted so that provides support for placing at least one, preferentially a plurality of types of, beverage recipient, and discharge of said beverage discharge flow (BD) to the interior of said collection space (A),
whereby said beverage preparation apparatus presents an opening adapted so that provides introduction of said portion of edible substance, and so that can be closed and in connection with a respective brewing device, and adapted for supply of said edible substance, whereby said opening is provide next to said discharge disposition, preferentially in the same exterior surface of said apparatus.

Said beverage discharge disposition can be provided on a plane more elevated than said brewing device, so that any rest of beverage discharge can be retained upstream of the discharge disposition under the action of the gravity force, whereby said brewing device is provided inside or outside of the casing of said beverage preparation machine.

The system can include a plurality of types of beverage recipients presenting different dimension, in particular different dimensions of respective base regions, but adapted so as to engage in a same type of beverage discharge disposition, in particular presenting a similar opening, whereby it is preferred when at least one of said types of beverage recipients is disposable.

Another objective of the present invention is to provide a method for preparing beverages including the use of a recipient and of a beverage discharge disposition, whereby the beverage discharge flow through a base region of said recipient, so that the retention of the recipient is provided in ergonomic manner.

This objective is attained according to the present invention by means of a method for preparing beverages according to claim 13, whereby preferred embodiments are described in the secondary claims.

### Description of figures

The invention shall hereinafter be explained in greater detail based upon preferred embodiments and the attached Figures.

The Figures show, in simplified schematic representations:
- Figure 1:: side view of main components of a beverage preparation system according to prior art;
- Figure 2:: side view (left-hand side) and respective side cut (right-hand side) of a recipient (1) according to prior art;
- Figure 3:: top view of an embodiment of a beverage preparation system according to the invention, in a first position of the recipient (1);
- Figure 4:: side-cut view of an embodiment of a beverage preparation system according to the invention, in a first position of the recipient (1);
- Figure 5:: top view of an embodiment of a beverage preparation system according to the invention, in a second position of the recipient (1);
- Figure 6:: top view of an embodiment of a beverage preparation system according to the invention, in a second position of the recipient (1);
- Figure 7:: top view of an embodiment of a beverage recipient (1) in a beverage preparation system according to the invention;
- Figure 8:: side view of an embodiment of a beverage recipient (1) in a beverage preparation system according to the invention;
- Figure 9:: side view of a flow regulation disposition (12) in a recipient (1) of a beverage preparation system according to the invention;
- Figure 10:: side cut views of a beverage preparation system according to the invention;
- Figure 11:: side cut view of an embodiment of flow regulation disposition (2) in a recipient (1) of beverage preparation system according to the present invention;
- Figure 12:: side and front views of a beverage preparation apparatus (3) in a beverage preparation system according to the invention.

### Detailed description of preferred embodiments of the invention

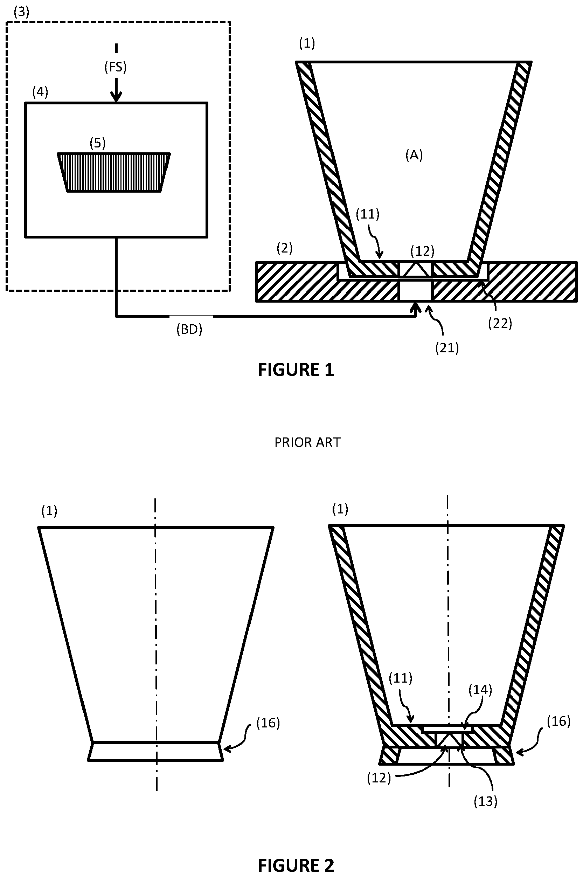

**Figure 1** schematically represents a beverage preparation system according to prior art. Said system comprises at least one type of recipient (1), such as for example a cup or a glass, that presents a base region (11) comprising a flow regulation disposition (12) and adapted so that can be retained in a beverage discharge disposition (2).

In particular, said beverage recipient (1, 1') presents a flow regulation disposition (12) of the valve type, provided in a passage opening (110) of said base region (11) and adapted so that only provides passageway to a beverage discharge flow (BD) downstream, into said collection space (A), if impinged with a flow pressure bigger than a previously defined flow pressure.

The beverage discharge disposition (2) is adapted so that can retain said at least one type of beverage recipient (1) and presents at least one beverage discharge element (21) adapted so that can engage with said base region (11), so that the beverage discharge to the interior of the beverage recipient (1) unfolds through said base region (11).

Moreover, the system further comprises an apparatus (3) for preparing beverages that includes at least one brewing device (4) adapted for collecting a portion (5) of edible substance and, by means of the supply of a pressurized fluid flow (FS), obtaining a beverage discharge flow (BD) that is conducted to said beverage discharge disposition (2).

**Figure 2** represents a beverage recipient (1), of the type cup, glass or similar, of a beverage preparation system according to the prior art.

The beverage recipients (1) comprise a base region (11) presenting a retention hole (13) where there is provided a flow regulation disposition (12), for example of the type one-way valve, and a passage opening (14) that provides flow passageway into said recipients ((1). Moreover, portion (16) associated with said base region (11) and adapted so that can be retained on said discharge disposition (2).

It is preferred when said flux regulation disposition (12) is provided by a device of type one-way valve, in particular a valve regulated by the upstream flow pressure, and provided so that only enable flow passageway in case the upstream flow pressure is bigger than 1,2 bar, preferentially bigger than 3 bar.

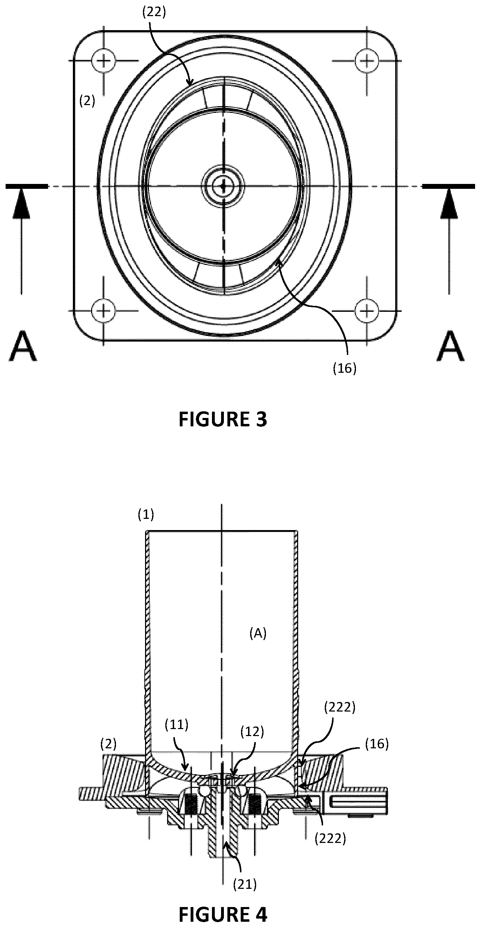

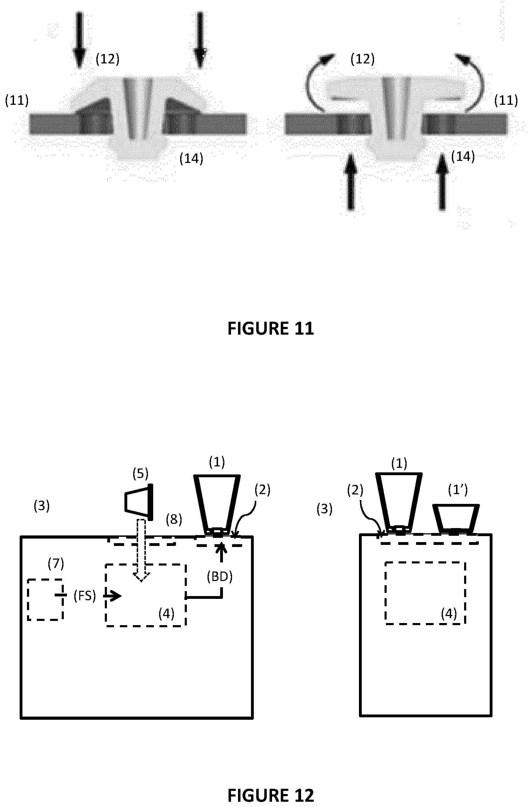

**Figures 3** and **4****,** and **Figures 5** and **6** show a preferred embodiment of the beverage preparation system according to the present invention, and that can be provided as also represented in **Figure 12****.**

In particular, the Figures represent a beverage recipient (1) adapted so that can be placed and retained, at least during the beverage preparation cycle, in a beverage discharge disposition (2) that comprises a discharge element (21) and a recipient placement disposition (22), whereby said base region (11) is adapted so that provides placing the beverage recipient (1, 1') standing upon said recipient placement disposition (22) and provides beverage entry under a given flow press through said beverage discharge element (21).

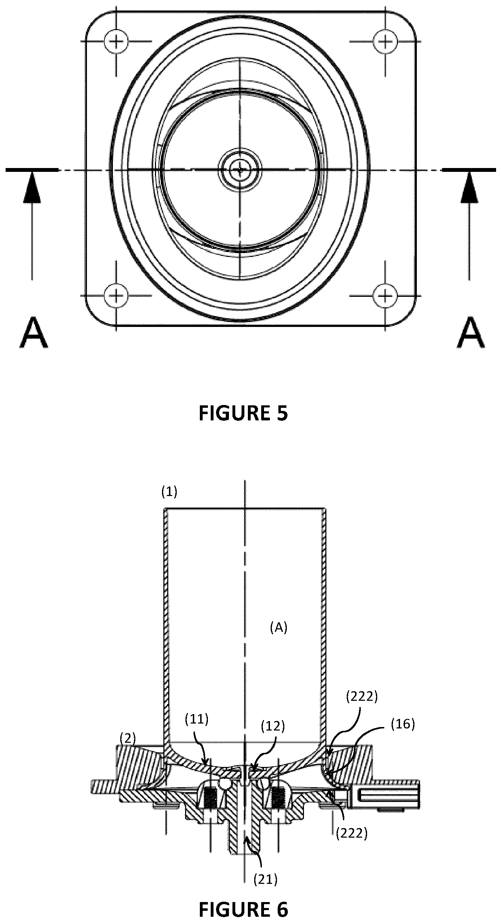

**Figures 3** and **4** represent said beverage recipient (1) in a first position (I) of placement on said recipient placement disposition (22), whereas **Figures 5** and **6** represent said recipient (1) in a second position (II) rotated relative to the first position.

According to an inventive aspect, said base region (11) comprises an engagement portion (16) that presents an exterior perimeter adapted so that said base region (11) can be introduced on said recipient placement disposition (22) in a first position (I) of said engagement portion (16), and that can be retained inside of said recipient placement disposition (22) in a second position (II) where said base region (11) is rotated relative to said first position (I), around a rotation axis parallel to the axial axis of said recipient (1), thereby providing a retention of said recipient (1) in opposition to the flow discharge pressure through said beverage discharge element (1) .

It is preferred when said first position (I) differs from said second position (II) by an angular distance of at least 10°, preferentially by at least 15°, so that provides a more ergonomic handling, while keeping retention reliability.

It is preferred when said engagement portion (16) projects outwards from said base region (11) along at least part of the exterior perimeter defined by the vertical projection of said base region (11).

It is further preferred when said recipient placement disposition (22) comprises an opening (221) and a support base (222) at a lower level with relation to said opening (221), whereby the exterior perimeter of said opening (221) and support base (222) presents a similar shape arranged in a different position.

It is preferred when said engagement portion (16) presents an exterior perimeter that presents two characteristic orthogonal dimensions, including diameters, similar to, preferentially not differing by more than 10% with relation to, respective two orthogonal dimensions characteristics of said opening (221).

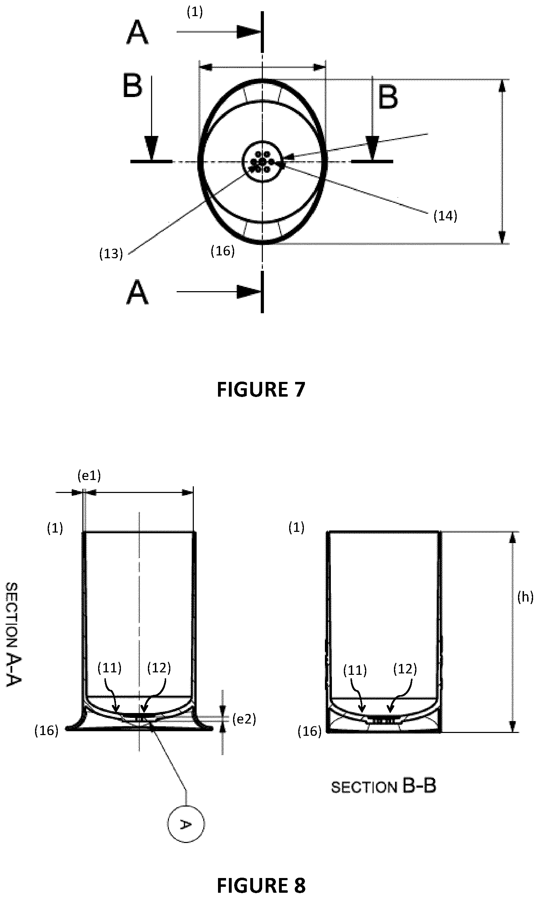

As can be better observed in **Figures 7** and **8****,** in the case of the represented preferred embodiment of recipient (1), the engagement portion (16) only projects outwards along two portions of said base region (11), in particular so that configures a general geometric shape of oval type.

Moreover, it is preferred when said recipient (1) comprises a flow regulation disposition (12) of the type butterfly valve, or similar, that presents a general shape of umbrella type whereby a pole part (121) is retained in a retention hole (13) and an flap part (122) develops so that covers said flow passageways (14), and adapted so that the exterior region can be deflected in case of being impinged by a pressurized flow with a previously defined pressure value.

It is preferred when said base region (11) further presents a plurality of flow passageways (14) adapted so that are covered by said flow regulation disposition (12) in case of not being impinged by a pressurized flow with a previously defined pressure value.

It is preferred when said base region (11) presents at least 4 and at most 12, preferentially at least 6 and at most 8 flow passageways (14), whereby said flow passageways (14) present a characteristic dimension, for example diameter, smaller than 4 mm, preferentially smaller than 3 mm.

Said recipient (1) can present a part associated with said collection space (A) that presents a substantially circular tubular form, whereby the cross section presents a characteristic dimension comprised between 30 mm and 120 mm, preferentially between 40 mm and 100 mm, and a relation between width and height of at most 5:1, preferentially at most 4:1.

Said recipient (1) can present a wall thickness of said collection space (A) smaller than 3 mm, preferentially smaller than 2 mm, whereby said thickness varies along the envelope of recipient (1) between a first value (e₁) of at most 1 mm, in particular in the region that confines the opening in the collection space (e₂) of at most 2 mm, in particular in the region of the base region (11).

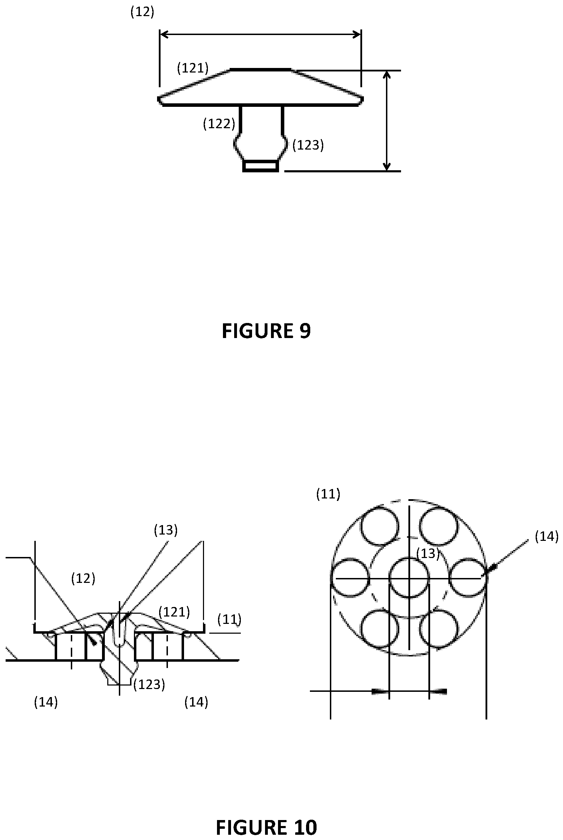

As one can better observe in **Figures 8** and **10****,** said base region (11) comprises a retention hole (13) that presents a characteristic dimension of at most 5 mm, preferentially at most 3 mm, and preferentially rounded edges on the upwards-oriented side.

As represented in **Figure 9**, said flow regulation disposition (12) presents a retention region (123) provided in a respective pole part (122), and adapted so that provides retention of said flow regulation disposition (12) in said base region (11) when impinged by a pressurized flow that flow through the flow passageways (14) so as to impinge the flap part (121) of said flow regulation disposition (12).

As represented in **Figure 12****,** the system according to the present invention comprises an apparatus (3) or beverage preparation machine, that presents at least one brewing device (4) as an interior or exterior part of machine (3), provided so that can collect a portion (5) of edible substance precursor of beverage, for example contained in a capsule or similar.

Moreover, said apparatus (3) includes a fluid reservoir (not represented), as well as a flow pressurization device (7) and a fluid heating device (not represented), so that can supply a flow (FS) at a temperature comprised between 60 and 100 °C and under a pressure comprised between 1 and 20 bar, so as to interact with said edible substance.

Said beverage discharge flow (BD) is after conducted from an exit of said brewing device (4) to the beverage discharge disposition (2) arranged downstream therefrom and that includes at least one beverage discharge element (21) adapted for engaging, preferentially by means of pressurized fitting, with the base region (11) of a beverage recipient (1, 1').

In particular, according to the represented embodiment, said beverage discharge disposition (2) is arranged next to an opening (8) adapted for entry of said portion (5) of edible substance, for example of a capsule, on a same single top exterior surface of the casing of said beverage preparation apparatus (3).

According to another preferred embodiment, said apparatus (3) further comprises condition display means (not represented) adapted so as to communicate to a user the correct placement of said beverage recipient (1, 1') on said beverage placement disposition (2), whereby said condition display means are of at least of type including visual, haptic and acoustic type and are preferentially provided associated with said beverage discharge disposition (2).

The system includes a plurality of beverage recipients (1, 1') presenting different dimensions, in particular different dimensions of respective base regions (11), but adapted so as to engage on a same type of beverage discharge disposition (2), whereby at least one of said types of beverage recipients (1, 1') is a disposable recipient.

In the case of a beverage preparation method according to the present invention, the following steps are considered:
- providing a beverage preparation machine (3) comprising a beverage discharge disposition (2);
- providing a beverage recipient (1) that presents a base region (11) presenting a flow regulation disposition (12);
- placing said beverage recipient (1) upon said beverage discharge disposition (2), so that said base region (11) passes along an opening (221) of said beverage discharge disposition (2) and sits upon a support base (222);
- rotating said beverage recipient (1) by at least 5°, preferentially by at least 15°, around the longitudinal axis of a collection space (A), for example in the clockwise direction;
- injecting a beverage discharge flow (BD) through said beverage discharge disposition (2), preferentially with a flow pressure bigger than the pressure required for flowing through said flow regulation disposition;
- rotating said beverage recipient (1) in the reverse direction, for example in the reverse-clockwise direction, until the base region (11) of said recipient (1) can pass along the opening (221).

It is herewith provided an ergonomic and reliable use of a beverage preparation system of the type of the present invention, without the need for further retention elements of said beverage recipient and respective construction complexity.

It is preferred when said method further includes the step of displaying a signal to a user, preferentially acoustic and/or haptic, associated with obtaining a given rotation position of said recipient (1) in the beverage discharge disposition (2), corresponding to a retention position of said recipient (1) thereupon.

## Claims

1. **System** for preparing beverages from a portion of edible substance, and that includes:
- at least one type of beverage recipient (1, 1'), presenting a general shape of glass, cup type or similar, with a collection space (A) that develops generally upwards from a base region (11);
- at least one type of apparatus (3) for preparing beverages, presenting a beverage discharge disposition (2) that comprises a beverage discharge element (21) and a recipient placement disposition (22),
whereby said base region (11) is adapted so that provides placement of said beverage recipient (1, 1') standing on said recipient placement disposition (22) and provided beverage entry under a given flow pressure and along an approximately vertical direction from said beverage discharge element (21), **characterized**
**in that** said base region (11) presents an engagement portion (16) that develops along a perimeter extension in a transversal direction relative to the beverage discharge direction, and is adapted so that said base region (11) can be placed on said recipient placement disposition (22) in a first angular region (I) of said engagement portion (16), with relation to said recipient placement disposition (22), and that can be retained in a second angular region (II) that is adjacent to said first angular region (I) and where said base region (11) is rotated relative to said first angular region (I), thereby providing a retention of said recipient (1) on said recipient placement disposition (22) relative to the discharge flow pressure of the beverage by said beverage discharge element (21).

2. System according to claim 1, **characterized**
**in that** said first angular region (I) differs from said second angular region (II) by an angular extension of at least 10°, preferentially of at least 15°, around an at least approximately vertical rotation axis, and
**in that** said engagement portion (16) configures the exterior perimeter of said base region (11), whereby said exterior perimeter preferentially presents a shape that corresponds to a perfect geometry when seen in top view, and different from a circle.

3. System according to claim 1 or 2, **characterized**
**in that** said engagement portion (16) projects outwards from said base region (11) and with relation to the sidewall of the recipient (1), along part, preferentially along at least two and at most four portions of perimeter between each other, of the exterior perimeter of said base region (11), said portions of perimeter projected outwards corresponding at least approximately to retention elements in case the engagement portion (16) is rotated on said second angular regions (II).

4. System according to claims 1 to 3, **characterized in that** said recipient placement disposition (22) comprises a placement opening (221) and a support base (222) at a lower level with relation to said placement opening (221), whereby the exterior perimeter of said placement opening (221) and support base (222) is provided according to at least one of:
- presents a different shape;
- presents an at least similar shape arranged in a different angular position.

5. System according to claims 1 to 4, **characterized in that** said placement opening (221) presents a perimeter with a shape different from the shape of the exterior perimeter of said support base (222).

6. System according to claims 1 to 4, **characterized in that** said placement opening (221) presents a perimeter with a shape similar to the shape of the exterior perimeter of said engagement portion (16).

7. System according to claims 1 to 6, **characterized in that** said engagement portion (16) presents an exterior perimeter that presents two characteristic orthogonal dimensions, including diameters, similar to, preferentially that do not differ by more than 10% with relation to, two corresponding orthogonal dimensions characteristic of said placement opening (221), and **in that** said engagement portion (16) presents a simple geometric shape, when seen in top view, including an oval, triangular, squared, rectangular, diamond, or other shape.

8. System according to any one of claims 1 to 7, **characterized in that** said engagement portion (16) presents the shape of an oval or of a rectangle, with a first characteristic dimension that corresponds to the greater dimension of said shape and that does not exceed twice a second characteristic dimension, that corresponds to the smaller dimension of said shape of engagement portion (16).

9. System according to any one of claims 1 to 8, **characterized in that** said recipient (1) comprises a flow regulation disposition (12) of the type butterfly valve, or similar, that presents a general shape of umbrella type whereby a pole part (121) is retained in a retention hole (13) and a flap part (122) develops so that covers said flow passageways (14), and adapted so that the exterior region can be deflected in case of being impinged by a pressurized flow with a previously defined pressure value.

10. System according to any one of claims 1 to 9, **characterized in that** said base region (11) further presents a plurality of flow passageways (14) adapted so that are covered by said flow regulation disposition (12) in case of not being impinged by a pressurized flow with a previously defined pressure value.

11. System according to any one of claims 1 to 10, **characterized in that** said base region (11) presents at least 4 and at most 12, preferentially at least 6 and at most 8 flow passageways (14), whereby said flow passageways (14) present a characteristic dimension, for example diameter, smaller than 4 mm, preferentially smaller than 3 mm.

12. System according to any one of previous claims 1 to 11, **characterized in that** said base region (11) comprises a retention hole (13) that presents a characteristic dimension of at most 5 mm, preferentially at most 3 mm, and preferentially rounded edges on the upwards oriented side, and **in that** said flow regulation disposition (12) presents a retention region (123) provided in a respective pole part (122), and adapted so that provides retention of the flux regulation disposition (12) in the base region (11) when impinged by a pressurized flow that flows through said flow passageways (14) so as to impinge the flap part (121) of said flow regulation disposition (12).

13. System according to any one of previous claims, **characterized in that** said recipient (1) is provided in a synthetic material and is adapted so that can be produced in a single piece by means of injection of synthetic material.

14. Process of preparing a beverage, in particular by means of a system for preparing beverages according to any one of claims 1 to 13, **characterized in that** comprised the following steps:
- providing a beverage preparation machine (3) comprising a beverage discharge disposition (2);
- providing a beverage recipient (1) that presents a base region (11) that presents a flow regulation disposition (12) ;
- placing said recipient (1) upon said beverage discharge disposition (2), so that said base region (11) passes along an opening (221) of said beverage discharge disposition (2) and sits upon a support base (222);
- rotating said recipient (1) by at least 5°, preferentially by at least 15°, around the longitudinal axis of a collection space (A), for example in the clockwise direction;
- injecting a beverage discharge flow (BD) through said beverage discharge disposition (2), preferentially with a flow pressure bigger than the pressure necessary for flowing through said flow regulation disposition;
- rotating said recipient (1) in the reverse direction, for example in the reverse clockwise direction, until said base region (11) of recipient (1) can pass along said opening (221) .

15. Process of preparing a beverage, according to claim 14, **characterized in that** includes the step of displaying to the user a signal, preferentially acoustic and/or haptic, associated with obtaining a given rotation position of said recipient (1) on the beverage discharge disposition (2), corresponding to a retention position of said beverage recipient (1) thereupon.
